# EUROPÄISCHE PATENTSCHRIFT

(11) **EP 0 263 262 B1**
(45) Veröffentlichungstag und Bekanntmachung des Hinweises auf die Patenterteilung: **24.03.1993**
(21) Anmeldenummer: 87111525.9
(22) Anmeldetag: 10.08.1987
(51) Int. Cl.: B60K 31/00

(54) **Abstandsregelungssystem für Kraftfahrzeuge**
Distance-regulating system for automotive vehicles
Système de régulation de distance pour véhicules automobiles

(30) Priorität: 08.10.1986 DE 3634302
(43) Veröffentlichungstag der Anmeldung: 13.04.1988
(73) Patentinhaber: Dr.Ing.h.c. F. Porsche Aktiengesellschaft, 70435 Stuttgart (DE)
(72) Erfinder: Marx, Dieter, Dr. Dipl.Phys., D-7053 Kernen (DE); Stelter, Norbert, Dipl.-Ing., D-7251 Weissach (DE)

(56) Entgegenhaltungen:
- DE-A- 2 114 621
- DE-A- 3 440 120
- DE-A- 3 501 032
- FR-A- 2 131 433
- FR-A- 2 374 679

## Beschreibung

Die Erfindung betrifft ein Abstandsregelungssystem für Kraftfahrzeuge nach der Gattung des Hauptanspruchs.

Der Individualverkehr mit Kraftfahrzeugen weist insbesondere in den letzten Jahren ein kräftiges Wachstum auf, was zu einer starken Belastung der Verkehrswege und zu einem Ansteigen des Kraftstoffgesamtverbrauchs des Individualverkehrs geführt hat. Der Ausbau der Verkehrswege konnte mit diesem Wachstum schon aus Gründen des Umweltschutzes und der relativ dichten Besiedelung bzw. Bebauung, beispielsweise von Europa, nicht im erforderlichen Maß mithalten.

Es ist daher erforderlich, einerseits die gegebenen Verkehrswege so zu nutzen, daß der Individualverkehr in geeigneter Weise besser auf diese aufgeteilt wird; andererseits ergibt sich die Notwendigkeit, die Fahrzeugführer der Kraftfahrzeuge von zumindest einem Teil ihrer, beim Führen des Kraftfahrzeugs auf sie zukommenden Aufgaben zu entlasten. Ebenso erscheint es notwendig, den Kraftstoffgesamtverbrauch des Individualverkehrs zu senken.

Im Rahmen eines zu dieser Problematik laufenden Forschungsprojekts (Prometheus), das von der europäischen Kraftfahrzeugindustrie getragen und durch die europäische Gemeinschaft gefördert wird, wurde bereits vorgeschlagen, jeweils mehrere Kraftfahrzeuge zu einem Fahrzeugverband zusammenzuschließen und, mit relativ geringem Abstand zueinander, auf einem Verkehrsweg hintereinander herfahren zu lassen.

Hierdurch wird einerseits erreicht, daß die Kraftfahrzeuge relativ wenig Raum auf einer befahrenen Strecke benötigen, andererseits werden zumindest durch Abstandsregelung zwischen den Fahrzeugen die Fahrzeugführer spürbar entlastet. Durch den relativ geringen Abstand zwischen den Fahrzeugen (d.h., ein Fahrzeug fährt immer im "Windschatten" des vorausfahrenden Kraftfahrzeugs) ergibt sich ferner eine spürbare Einsparung des verbrauchten Kraftstoffs, da der Gesamtwirkungsgrad des Fahrzeugverbands durch den reduzierten Luftwiderstand gegenüber einzeln fahrenden Fahrzeugen verbessert wird.

Zur Abstandsregelung zwischen den Fahrzeugen wurden bereits Verfahren und Vorrichtungen entwickelt, welche den Abstand jeweils zum vorausfahrenden Kraftfahrzeug messen und eine Antriebs- bzw. Verzögerungsleistung des Kraftfahrzeugs so steuern, daß sich ein Sollabstand einstellt. In der DE-A-35 01 032 wird die Messung des Abstands beispielsweise durch ein optisches Erfassen von auf der Fahrbahn angeordneten Markierungen vorgenommen, wobei Informationen über diese Meßwerte zwischen jeweils zwei Fahrzeugen über Sende- und Empfangsanlagen austauschbar sind.

Die DE-A-2 114 621 umfaßt ein Abstandsregelungssystem für jeweils zwei hintereinander herfahrende Objekte, bei dem das nachfolgende Objekt in Abhängigkeit von der Fahrgeschwindigkeit des unmittelbar vorausfahrenden geregelt wird. Das Verhalten des nachfolgenden Objekts wird mit Hilfe eines von dem unmittelbar vorausfahrenden Objekt abgegebenen Signals bestimmt, das vom nachfolgenden Fahrzeug aufgenommen wird. Ausstrahlung und Empfang des Signals sind von der Fahrgeschwindigkeit des jeweiligen Fahrzeugs beeinflußt.

Mit der DE-A-34 40 120 ist eine Einrichtung zum Auswerten von Geschwindigkeitsreduzierungen eines vorausfahrenden Fahrzeugs bekannt geworden, mit deren Hilfe ab einer bestimmten Verzögerungsschwelle eine Warn- oder Regeleinrichtung aktiviert wird. Mit der Regeleinrichtung wird die Geschwindigkeit des Folgefahrzeugs der des vorausfahrenden Fahrzeugs angepaßt.

Die Messung und Einregelung des Abstands erfordert jedoch eine gewisse Verzögerungszeit für die Meßwerterfassung (und -Übertragung) und die Einregelung, da die Dynamik eines derartigen Regelungssystems, selbst bei noch so guter Regelung, nicht vernachlässigbar ist. Hierdurch ergehen sich insbesondere bei einem größeren Fahrzeugverband unvermeidliche Schwingungen des Abstands zwischen den Fahrzeugen, welche sich eine ortsfesten Beobachter als sogenannter "Zieharmonikaeffekt" darstellen und sich schlimmstenfalls aufschaukeln können.

Es ist daher Aufgabe der Erfindung, ein Abstandsregelungssytem für Kraftfahrzeuge zu schaffen, das diese Nachteile vermeidet und es ermöglicht, daß Kraftfahrzeuge selbst in einem größeren Fahrzeugverband einem den Fahrzeugverband anführenden Kraftfahrzeug ohne maßgebliche Schwingungen der Abstände zwischen den Kraftfahrzeugen folgen können.

Die Erfindung wird durch die kennzeichnenden Merkmale des Anspruchs 1 gelöst. Weitere Ausgestaltungen der Erfindung sind in den Unteransprüchen enthalten.

Die Vorteile der Erfidnung sind in erster Linie darin zu sehen, daß eine Vorgabe einer zeitlichen Änderung der Fahrgeschwindigkeit (Sollbeschleunigung) innerhalb eines Kraftfahrzeugs des Kraftfahrzeugverbands erfolgt und eine Antriebs- bzw. Verzögerungsleistung eines jeden Kraftfahrzeugs innerhalb des Fahrzeugverbands so geregelt wird, daß die Änderung seiner fahrzeugeigenen Geschwindigkeit (Istbeschleunigung) der Sollbeschleunigung mit minimaler Differnz bzw. vorgegebener Dynamik nachgeführt wird. Dadurch wird erreicht, daß sich Schwingungen des Abstands zwischen den Fahrzeugen erst gar nicht aufbauen können, da alle Fahrzeuge einem vorgegebenen Sollwert (Sollbeschleunigung) praktisch gleichzeitig, d. h. ohne oder mit gleicher Verzögerung folgen.

Die Erfindung wird anhand eines in einer Zeichnung dargestellten Beispiels näher erläutert.

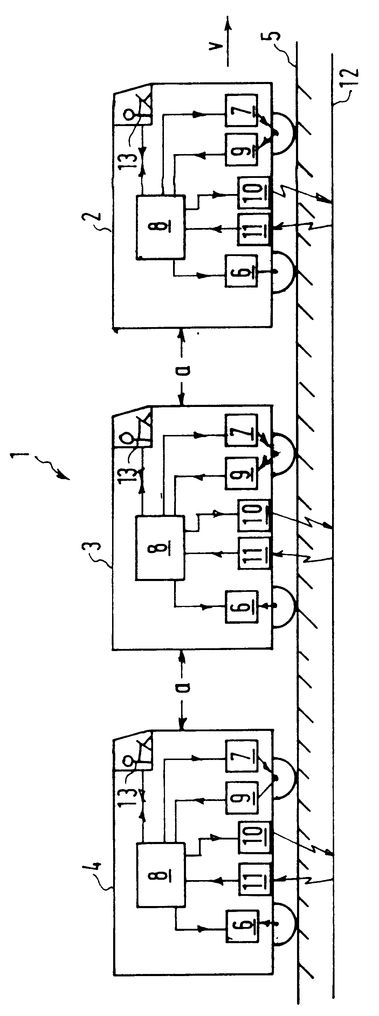

In der Figur ist mit 1 ein Fahrzeugverband mit mehreren, hintereinanderherfahrenden Kraftfahrzeugen 2, 3, 4 gezeigt; die Kraftfahrzeuge 2, 3, 4 bewegen sich längs einer Fahrbahn 5. Die Kraftfahrzeuge 2, 3, 4 sind jeweils mit einem Antrieb 6 und einer Bremseinrichtung 7 ausgestattet, wobei der Antrieb 6 vorzugsweise mit einer Brennkraftmaschine und einem dieser nachgeschalteten, vorzugsweise mit zugkraftunterbrechungsfreiem Gangwechsel arbeitenden Automatikgetriebe erfolgt. Die Kraftfahrzeuge 2, 3, 4 umfassen ferner eine Steuereinrichtung 8, sowie eine Meßeinrichtung 9 für die fahrzeugeigene Geschwindigkeit v und eine Sendeanlage 10 und eine Empfangsanlage 11. Die Steuereinrichtungen 8 der Kraftfahrzeuge 2, 3, 4 können über die Sendeanlage 10 und die Empfangsanlage 11 Informationen austauschen; die Übermittlung der Informationen kann über elektromagnetische oder akustische Wellenausbreitung oder über eine induktive Ankoppelung an ein in der Fahrbahn 5 angeordnetes Leitkabel 12 erfolgen. Jedes Kraftfahrzeug 2, 3, 4 ist mit einem Fahrzeugführer 13 besetzt, welcher über die Steuereinrichtung 8 auf Antrieb 6 und Bremseinrichtung 7 einwirken kann.

Die Steuerung der Antriebsleistung des Antriebs 6 und der Verzögerungsleistung der Bremseinrichtung 7 erfolgt nun durch die Steuereinrichtung 8. Hierzu wird in einem Kraftfahrzeug des Fahrzeugverbands eine Vorgabe einer zeitlichen Änderung der fahrzeugeigenen Geschwindigkeit dvs/dt, d. h. eine Sollbeschleunigung vorgenommen; das Wort Sollbeschleunigung soll hier jedoch nicht allein für eine positive zeitliche Änderung der fahrzeugeigenen Geschwindigkeit stehen, sondern auch für eine negative, d. h., eine Fahrzeugverzögerung.

Die Sollbeschleunigung dvs/dt wird nun über die Sendeanlage 10 in das Leitkabel 12 eingekoppelt und zu den Empfangsanlagen 11 der anderen Kraftfahrzeuge übertragen. Die Steuereinrichtung 8 aller Kraftfahrzeuge 2, 3, 4 erfassen über die Meßeinrichtung 9 die fahrzeugeigene Geschwindigkeit v und bestimmen daraus deren zeitliche Änderung (Istbeschleunigung) dvi/dt. Die Steuergeräte 8 regeln die Antriebs- und die Verzögerungsleistung so, daß die Änderung der fahrzeugeigenen Geschwindigkeit dvi/dt des von ihnen gesteuerten Kraftfahrzeugs der Sollbeschleunigung dvs/dt mit minimaler Differenz bzw. einer vor gegebenen Dynamik nachgeführt wird.

Die Sollbeschleunigungen werden primär durch einen Fahrzeugführer des den Fahrzeugverband anführenden Kraftfahrzeugs 2 und/oder einen Autopiloten und/oder ein Verkehrsleitsystem direkt vorgegeben und/oder aus den Bedienelementsignalen und/oder Betriebs- bzw. Fahrparametern dieses Kraftfahrzeugs 2 ermittelt. Die für die Regelung zugrunde gelegte, den weiteren Kraftfahrzeugen übermittelte Sollbeschleunigung dvs/dt kann jedoch gegebenenfalls durch die Steuereinrichtung 8 in ihrem Wert begrenzt werden, falls irgendeines der am Fahrzeugverband 1 teilnehmenden Kraftfahrzeuge 2, 3, 4 dieser Sollbeschleunigung nicht zu folgen vermag.

Hierzu übermittelt jedes im Fahrzeugverband fahrende Kraftfahrzeug bei seinem Eintritt in diesen dem anführenden und den anderen Kraftfahrzeugen 2, 3, 4 Grenzwerte seiner maximal bzw. minimal aufbringbaren Änderung seiner fahrzeugeigenen Geschwindigkeit dvi/dt. Die Steuereinrichtung 8 des anführenden Kraftfahrzeugs gibt nun die Sollbeschleunigung dvs/dt so vor, daß sie sich stets innerhalb der betragsmäßig niedrigsten Grenzwerte bewegt.

Es kann jedoch vorkommen, daß ein Kraftfahrzeug 3, 4 innerhalb des Fahrzeugverbands 1 beispielsweise durch ein plötzlich auftauchendes Hindernis eine Notbremsung einleiten muß. Hierzu wird der Fahrzeugverband aufgelöst, und das die Notbremsung einleitende Kraftfahrzeug übernimmt die Vorgabe der Sollbeschleunigung dvs/dt für die nachfolgenden Kraftfahrzeuge.

Ebenso kann es vorkommen, daß eines der Kraftfahrzeuge innerhalb des Kraftfahrzeugverbands bei einer Verzögerung der Vorgabe momentan nicht zu folgen vermag, beispielsweise aufgrund eines verminderten Reibwerts zwischen Rad und Fahrbahn, so daß sich sein Abstand zum vorausfahrenden Fahrzeug vermindert. Im Rahmen der gegebenen Möglichkeit übernimmt dieses Kraftfahrzeug die Vorgabe der Sollbeschleunigung dvs/dt zumindest so lange, bis es die ursprüngliche Vorgabe wieder erreicht. Es ist hierzu auch möglich, daß die vorausfahrenden Kraftfahrzeuge zu Pufferungszwecken vorübergehend ihre Abstände jeweils zum vorausfahrenden Kraftfahrzeug zumindest vorübergehend vermindern.

Für den Fall, daß eines der Kraftfahrzeuge bei einer Beschleunigung der Vorgabe momentan nicht zu folgen vermag, beispielsweise durch einen auftretenden Antriebsschlupf oder eines Problems beim Antrieb 6, übernimmt dieses zumindest solange die Vorgabe der Sollbeschleunigung dvs/dt, bis es die ursprünglichen Vorgabe durch das anführende Kraftfahrzeug 2 wieder erreicht. Ebenso ist es denkbar, daß es die Vorgabe der Sollbeschleunigung dvs/dt für die nachfolgenden Kraftfahrzeuge zumindest so lange übernimmt, bis der aufgebrochene Fahrzeugverband wieder zusammengeführt ist. Die Regelung der Antriebs- bzw. Verzögerungsleistungen aller Kraftfahrzeuge werden derart ausgelegt, daß sie jeweils zu gleicher Zeit einsetzen; sie erhalten hierzu gegebenenfalls eine Zeitverzögerung, welche unter anderem die Zeit zu Übermittlung der Daten, d. h. der Sollbeschleunigung dvs/dt den nachfolgenden Kraftfahrzeugen berücksichtigt. Da im Falle der Übermittlung der Informationen über akustische Wellenausbreitung eine Signallaufzeit nicht vernachlässigt werden kann, kann es sinnvoll sein, diese Zeitverzögerung abhängig von der Position des Kraftfahrzeugs innerhalb des Fahrzeugverbands und den Abständen zwischen den Kraftfahrzeugen zu wählen. Die Regelung eines einem anderen Kraftfahrzeug unmittelbar vorausfahrenden Kraftfahrzeugs setzt hierbei jeweils um die Signallaufzeit verzögert ein.

Der Regelung- bzw. Nachführung der zeitlichen Änderung der fahrzeugeigenen Geschwindigkeit dvi/dt eines Kraftfahrzeugs an die Sollbeschleunigung dvs/dt kann aus Sicherheitsgründen eine Abstands- und/oder Geschwindigkeits- Feinregelung überlagert sein. Diese kommt jedoch erst dann zur Wirkung, wenn der Abstand zu einem Vorausfahrzeug einen vorgegebenen Toleranzbereich über- bzw. unterschreitet. Bei Wirksamwerden der Abstands- und/oder Geschwindigkeit- Feinregelung bei einem Kraftfahrzeug innerhalb des Fahrzeugverbands 1 übernimmt dieses momentan die Vorgabe der Sollbeschleunigung dvs/dt für die nachfolgenden Kraftfahrzeuge.

Für den Fall, daß die Regelungssysteme mit vernachlässigbarer Dynamik arbeiten bzw. bei Auftreten von Antriebsschlupf bei dem den Fahrzeugverband anführenden Kraftfahrzeug 2, kann die Sollbeschleunigung dvs/dt gleich der Istbeschleunigung dvi/dt des den Fahrzeugverband anführenden Kraftfahrzeugs gesetzt werden. Soll zusätzlich der Abstand zwischen den Fahrzeugen geschwindigkeitsabhängig eingestellt werden, so erscheint es sinnvoll, daß ein Fahrzeugführer 13 des den Fahrzeugverband anführenden Kraftfahrzeugs 2 und/oder ein Verkehrsleitsystem eine Sollgeschwindigkeit vs vorgibt, oder daß diese aus Bedienelement- Stellsignalen ermittelt wird. Die Steuereinrichtung 8 des den Fahrzeugverband anführenden Kraftfahrzeugs 2 ermittelt daraus eine Sollbeschleunigung dvs/dt, sowie einen zeitlichen Verlauf, den diese Sollbeschleunigung annehmen soll und eine Sicherheitszeitverzögerung tvs, welche zu einem sollgeschwindigkeitsabhängigen Sicherheitsabstand zu einem unmittelbar vor ihm fahrenden Kraftfahrzeugs führt; diese Werte werden an die nachfolgenden Kraftfahrzeuge übermittelt. Die Nachführung der Istbeschleunigung dvi/dt an die Sollbeschleunigung dvs/dt eines Kraftfahrzeugs (3, 4) folgt jeweils derjenigen des unmittelbar vorausfahrenden Kraftfahrzeugs mit dieser Sicherheitsverzögerung tvs, was zu den gewünschten Abständen zwischen den Kraftfahrzeugen 2, 3, 4 führt.

## Patentansprüche

1. Abstandsregelungssystem für einen Fahrzeugverband (1) aus wenigstens zwei hintereinander fahrenden Kraftfahrzeugen, wobei die Kraftfahrzeuge (2, 3, 4) mit aktiven Sende- (10) und Empfangsanlagen (11) ausgestattet sind, über die sie sich Informationen über eine elektromagnetische oder akustische Wellenausbreitung gegenseitig übermitteln können und jeweils eine, eine Antriebs- und eine Verzögerungsleistung des Kraftfahrzeugs (2, 3, 4) steuernde bzw. regelnde und eine fahrzeugeigene Geschwindigkeit (v) und einen Abstand (a) zu einem vorausfahrenden Kraftfahrzeug (2, 3) ermittelnde oder eine Geschwindigkeitsreduzierung des vorausfahrenden Fahrzeugs (2, 3) erfassende und auswertende Steuereinrichtung (8) aufweisen, **dadurch gekennzeichnet**, daß in einem Kraftfahrzeug (2, 3, 4) des Fahrzeugsverbands (1) eine Vorgabe einer Sollbeschleunigung oder Sollverzögerung (dvs/dt) erfolgt, welche an alle nachfolgenden Kraftfahrzeuge (2, 3, 4) übermittelt wird, und daß Steuereinrichtungen (8) der Kraftfahrzeuge (2, 3, 4) des Fahrzeugverbands (1) eine zeitliche Änderung der fahrzeugeigenen Geschwindigkeit (dvi/dt, Istbeschleunigung) bestimmen und die antriebs- bzw. Verzögerungsleistung so regeln, daß die Änderung ihrer fahrzeugeigenen Geschwindigkeit (dvi/dt) der Sollbeschleunigung (dvs/dt) mit minimaler Differenz bzw. vorgegebener Dynamik nachgeführt wird, wobei jedes im Fahrzeugverband (1) fahrende Kraftfahrzeug (2, 3, 4) bei seinem Eintritt in diesen den anderen Kraftfahrzeugen (2, 3, 4) Grenzwerte seiner maximal bzw. minimal aufbringbaren Änderung seiner fahrzeugeigenen Geschwindigkeit übermittelt und die Vorgabe der Sollbeschleunigung (dvs/dt) sich stets innerhalb der betragsmäßig niedrigsten Grenzwerte aller Kraftfahrzeuge (2, 3, 4) bewegt.

2. Abstandsregelungssystem nach Anspruch 1, **dadurch gekennzeichnet**, daß die Sollbeschleunigung (dvs/dt) durch einen Fahrzeugführer (13) des den Fahrzeugverband (1) anführenden Kraftfahrzeugs (2) oder einen Autopiloten oder ein Verkehrsleitsystem direkt vorgegeben oder aus den Bedienelement-Stellsignalen oder Betriebs- bzw. Fahrparametern eines Kraftfahrzeugs (2, 3, 4) ermittelt wird.

3. Abstandsregelungssystem nach Anspruch 2 oder 3, **dadurch gekennzeichnet**, daß bei einer notwendigwerdenden Notbremsung durch ein Kraftfahrzeug (3, 4) innerhalb des Fahrzeugverbands dieses die Vorgabe der zeitlichen Änderung der fahrzeugeigenen Geschwindigkeit (dvs/dt) aller nachfolgenden Kraftfahrzeuge (3, 4) übernimmt.

4. Abstandsregelungssystem nach Anspruch 1, 2 oder 3, **dadurch gekennzeichnet**, daß für den Fall, daß eines der Kraftfahrzeuge (2, 3, 4) bei einer Verzögerung der Vorgabe momentan nicht zu folgen vermag, dieses im Rahmen der gegebenen Möglichkeiten die Vorgabe der zeitlichen Änderung der fahrzeugeigenen Geschwindigkeit (dvs/dt) zumindest so lange übernimmt, bis es die ursprünglichen Vorgabe (dvs/dt) wieder erreicht.

5. Abstandsregelungssystem nach Anspruch 3 oder 4, **dadurch gekennzeichnet**, daß für den Fall, daß eines der Kraftfahrzeuge bei einer Verzögerung der Vorgabe (dvs/dt) momentan nicht zu folgen vermag, die Abstände (a) zwischen den vorausfahrenden Kraftfahrzeugen (2, 3, 4) zu Pufferungszwecken vorübergehend vermindert werden.

6. Abstandsregelungssystem nach wenigstens einem der vorangehenden Ansprüche, **dadurch gekennzeichnet**, daß für den Fall, daß eines der Kraftfahrzeuge (2, 3, 4) bei einer Beschleunigung der Vorgabe (dvs/dt) momentan nicht zu folgen vermag, dieses die Vorgabe der zeitlichen Änderung der fahrzeugeigenen Geschwindigkeit (dvs/dt) zumindest so lange übernimmt, bis es die ursprünglichen Vorgabe (dvs/dt) wieder erreicht.

7. Abstandsregelungssystem nach Anspruch 5 oder 6, **dadurch gekennzeichnet**, daß für den Fall, daß eines der Kraftfahrzeuge (2, 3, 4) bei einer Beschleunigung der Vorgabe (dvs/dt) momentan nicht zu folgen vermag, dieses die Vorgabe der zeitlichen Änderung der fahrzeugeigenen Geschwindigkeit (dvs/dt) für die nachfolgenden Kraftfahrzeuge (3, 4) zumindest so lange übernimmt, bis der aufgebrochene Fahrzeugverband (1) wieder zusammengeführt ist.

8. Abstandsregelungssystem nach wenigstens einem der vorangehenden Ansprüche, **dadurch gekennzeichnet**, daß die Regelung der Antriebs- bzw. Verzögerungsleistungen aller Kraftfahrzeuge (2, 3, 4) des Fahrzeugverbands (1) jeweils zu gleicher Zeit einsetzt.

9. Abstandsregelungssystem nach Anspruch 8, **dadurch gekennzeichnet**, daß die Regelung der Antriebs- bzw. Verzögerungsleistung eines jeweiligen Kraftfahrzeugs (2, 3, 4) des Fahrzeugverbands (1) mit einer Verzögerungszeit (tv) erfolgt, welche sich in erster Linie aus der Position des Kraftfahrzeugs innerhalb des Verbands (1) relativ zu diesem, der Signal- bzw. Datenübertragungsgeschwindigkeit und der Bearbeitungszeit zur Bestimmung der Antriebs- bzw. Verzögerungsleistung ergibt.

10. Abstandsregelungssystem nach wenigstens einem der vorangehenden Ansprüche, **dadurch gekennzeichnet**, daß der Nachführung der zeitlichen Änderung der fahrzeugeigenen Geschwindigkeit (dvi/dt) an die Sollbeschleunigung (dvs/dt) eines jeden Kraftfahrzeugs (2, 3, 4) eine Abstands- oder Geschwindigkeits- Feinregelung überlagert ist, wobei insbesondere die erstere lediglich dann wirksam ist, sofern ein Abstand zu einem Vorausfahrzeug einen vorgegebenen Toleranzbereich unter- bzw. überschreitet.

11. Abstandsregelungssystem nach Anspruch 10, **dadurch gekennzeichnet**, daß bei Wirksamwerden der Abstands- oder Geschwindigkeits- Feinregelung bei einem Kraftfahrzeug (2, 3, 4) innerhalb des Fahrzeugverbands (1) dieses die Vorgabe der Sollbeschleunigung (dvs/dt) für die nachfolgenden Kraftfahrzeuge (3, 4) übernimmt.

12. Abstandsregelungssystem nach wenigstens einem der vorangehenden Ansprüche, **dadurch gekennzeichnet**, daß die Sollbeschleunigung (dvs/dt) gleich der Istbeschleunigung (dvi/dt) des den Fahrzeugverband anführenden Kraftfahrzeugs (2) ist.

13. Abstandsregelungssystem nach wenigstens einem der vorangehenden Ansprüche, **dadurch gekennzeichnet**, daß die Übermittlung der Informationen über eine induktive Ankoppelung eines jeden Kraftfahrzeugs (2, 3, 4) an ein in oder neben der Fahrbahn (5) angeordnetes Leitkabel (12) erfolgt.

14. Abstandsregelungssystem nach wenigstens einem der Ansprüche 1 oder 3 bis 13, **dadurch gekennzeichnet**, daß eine Sollgeschwindigkeit (vs) durch einen Fahrzeugführer (13) des den Fahrzeugverband (1) anführenden Kraftfahrzeugs (2) oder einen Autopiloten oder ein Verkehrsleitsystem vorgegeben oder aus den Bedienelement- Stellsignalen ermittelt wird, aus welcher das Steuergerät (8) des den Fahrzeugverband (1) anführenden Kraftfahrzeugs (2) eine Sollbeschleunigung (dvs/dt) und deren zeitlichen Verlauf, sowie eine zu einem sollgeschwindigkeitsabhängigen Sicherheitsabstand (a(v)) führende Sicherheits- Zeitverzögerung (tvs), mit welcher die Nachführung der Istbeschleunigung (dvi/dt) an die Sollbeschleunigung (dvs/dt) eines Kraftfahrzeugs (3, 4) derjenigen des unmittelbar vorausfahrenden Kraftfahrzeugs (2, 3) folgen soll, bestimmt und vorgibt.

## Claims

1. A distance-regulating system for a series (1) of at least two motor vehicles travelling in succession, the motor vehicles (2, 3, 4) being provided with active emitting and receiving apparatus (10 and 11), by way of which they can transmit information between themselves by way of electromagnetic or acoustic wave propagation and each have a control device (8) controlling or regulating a driving and a retarding action of the motor vehicle (2, 3, 4) and determining a speed (v) specific to the vehicle and a distance (a) from a preceding motor vehicle (2, 3) or detecting and evaluating a reduction in speed of the preceding vehicle (2, 3), characterized in that a pre-set value of a nominal acceleration or nominal deceleration (dvs/dt) is made in one motor vehicle (2, 3, 4) of the series (1) of vehicles, the pre-set value being transmitted to all the following motor vehicles (2, 3, 4), and control devices (8) of the motor vehicles (2, 3, 4) of the series (1) of vehicles define a time change in the speed specific to the vehicle (dvi/dt, actual acceleration) and regulate the driving or deceleration action in such a way that the change in the speed thereof specific to the vehicle (dvi/dt) is set to track the nominal acceleration (dvs/dt) with the minimum difference or pre-set dynamics, wherein, on entering the series (1) of vehicles, each motor vehicle (2, 3, 4) travelling in the said series (1) of vehicles transmits threshold values of its maximally or minimally applicable change in the speed thereof specific to the vehicle to the other motor vehicles (2, 3, 4) and the pre-set value of the nominal acceleration (dvs/dt) always moves within the quantitatively lowest threshold values of all the motor vehicles (2, 3, 4).

2. A distance-regulating system according to Claim 1, characterized in that the nominal acceleration (dvs/dt) is pre-set directly by a driver (13) of the motor vehicle (2) leading the series (1) of vehicles or an autopilot or a traffic-guidance system or is determined from the control-device adjustment signals or operating or travelling parameters of a motor vehicle (2, 3, 4).

3. A distance-regulating system according to Claim 2 or 3 [*sic*], characterized in that in the event of an emergency braking becoming necessary on account of a motor vehicle (3, 4) within the series of vehicles the said motor vehicle (3, 4) adopts the pre-set value of the time change of the speed specific to the vehicle (dvs/dt) of all the following motor vehicles (3, 4).

4. A distance-regulating system according to Claim 1, 2 or 3, characterized in that, in the case where one of the motor vehicles (2, 3, 4) is momentarily unable to follow the pre-set value in the event of deceleration, in the context of the existing possibilities it adopts the pre-set value of the time change of the speed specific to the vehicle (dvs/dt) at least until it has reached the original pre-set value (dvs/dt) again.

5. A distance-regulating system according to Claim 3 or 4, characterized in that, in the case where one of the motor vehicles is momentarily unable to follow the pre-set value (dvs/dt) in the event of deceleration, the distances (a) between the motor vehicles (2, 3, 4) in front can be transiently reduced for buffer purposes.

6. A distance-regulating system according to at least one of the preceding Claims, characterized in that, in the case where one of the motor vehicles (2, 3, 4) is momentarily unable to follow the pre-set value (dvs/dt) in the event of acceleration, it adopts the pre-set value of the time change of the speed specific to the vehicle (dvs/dt) at least until it has reached the original pre-set value (dvs/dt) again.

7. A distance-regulating system according to Claim 5 or 6, characterized in that, in the case where one of the motor vehicles (2, 3, 4) is momentarily unable to follow the pre-set value (dvs/dt) in the event of acceleration, it adopts the pre-set value of the time change of the speed specific to the vehicle (dvs/dt) for the following motor vehicles (3, 4) at least until the broken-up series (1) of vehicles has come together again.

8. A distance-regulating system according to at least one of the preceding Claims, characterized in that the regulation of the driving or deceleration action of all the motor vehicles (2, 3, 4) of the series (1) of vehicles starts at the same time in each case.

9. A distance-regulating system according to Claim 8, characterized in that the regulation of the driving or deceleration action of a respective motor vehicle (2, 3, 4) of the series (1) of vehicles takes place with a deceleration time (tv) produced primarily from the position of the motor vehicle within the series (1) of vehicles relative thereto, the signalling or data-transmission speed and the processing time for determining the driving or deceleration action.

10. A distance-regulating system according to at least one of the preceding Claims, characterized in that a fine regulation of the distance or speed is superimposed upon the tracking of the time change of the speed specific to the vehicle (dvi/dt) towards the nominal acceleration (dvs/dt) of each motor vehicle (2, 3, 4), the first being effective in particular only when a distance from a preceding vehicle falls below or exceeds a pre-set tolerance range.

11. A distance-regulating system according to Claim 10, characterized in that when the fine regulation of the distance or speed comes into effect in a motor vehicle (2, 3, 4) within the series (1) of vehicles the said motor vehicle adopts the pre-set value of the nominal acceleration (dvs/dt) for the following motor vehicles (3, 4).

12. A distance-regulating system according to at least one of the preceding Claims, characterized in that the nominal acceleration (dvs/dt) is equal to the actual acceleration (dvi/dt) of the motor vehicle (2) leading the series of vehicles.

13. A distance-regulating system according to at least one of the preceding Claims, characterized in that the information is transmitted by way of an inductive connexion of each motor vehicle (2, 3, 4) to a leader cable (12) arranged in or beside the roadway (5).

14. A distance-regulating system according to at least one of Claims 1 or 3 to 13, characterized in that a nominal speed (vs) is pre-set by a driver (13) of the motor vehicle (2) leading the series (1) of vehicles or an autopilot or a traffic-guidance system or is determined from the control-member setting signals, from which [nominal speed (vs)] the control device (8) of the motor vehicle (2) leading the series (1) of vehicles determines and pre-sets a nominal acceleration (dvs/dt) and the time characteristic thereof, as well as a safety delay (tvs) which produces a safety distance (a(v)) dependent upon the nominal speed and by which the setting of the actual acceleration (dvi/dt) to track the nominal acceleration (dvs/dt) of a motor vehicle (3, 4) is to follow that of the motor vehicle (2, 3) immediately preceding.

## Revendications

1. Système de régulation de distance pour un convoi de véhicules (1) constitué d'au moins deux véhicules roulant l'un derrière l'autre, les véhicules (2, 3, 4) étant équipés d'installations actives d'émission (10) et de réception (11), par lesquelles ils peuvent se transmettre réciproquement des informations, par propagation d'ondes électromagnétiques ou acoustiques et comportant chacune un dispositif de commande (8) commandant ou réglant une puissance d' entraînement et une puissance de ralentissement du véhicule (2, 3, 4) et déterminant une vitesse (v) propre à chaque véhicule et une distance (a) par rapport à un véhicule (2, 3) précédent ou enregistrant et analysant une réduction de la vitesse du véhicule (2, 3) précédent, caractérisé en ce que dans un véhicule (2, 3, 4) du convoi (1) une valeur de consigne de l'accélération ou du ralentissement (dvs/dt) est imposée et transmise à tous les véhicules (2, 3, 4) suivants et en ce que des dispositifs de commande (8) des véhicules (2, 3, 4) du convoi (1) déterminent une variation dans le temps de la vitesse propre à chaque véhicule (dvi/dt, accélération réelle) et règlent la puissance d' entraînement ou de ralentissement de manière que la variation de leur vitesse propre (dvi/dt) suive l'accélération de consigne (dvs/dt) avec une différence minimale ou une dynamique donnée, chaque véhicule (2, 3, 4) roulant dans le convoi (1) transmettant, lors de son entrée dans celle-ci, aux autres véhicules (2, 3, 4), des valeurs limites de la variation maximale ou minimale à appliquer à leur vitesse propre et la valeur de l'accélération de consigne (dvs/dt) se déplaçant toujours à l'intérieur des valeurs limites absolues les plus basses de tous les véhicules (2, 3, 4).

2. Système de régulation de distance selon la revendication 1, caractérisé en ce que l'accélération de consigne (dvs/dt) est directement imposée par un conducteur (13) du véhicule (2) de tête du convoi (1) ou par un autopilote ou un système de guidage de circulation, ou est déterminée à partir des signaux de réglage d'éléments de commande ou à partir de paramètres de fonctionnement ou de conduite d'un véhicule (2, 3, 4).

3. Système de régulation de distance selon la revendication 2 ou 3, caractérisé en ce que si un freinage d'urgence devient nécessaire, pour un véhicule (3, 4) du convoi, celui-ci se charge d'imposer la variation dans le temps de la vitesse propre à chaque véhicule (dvs/dt) à tous les véhicules (3, 4) suivants.

4. Système de régulation de distance selon la revendication 1, 2 ou 3, caractérisé en ce que dans le cas où l'un des véhicules (2, 3, 4) n'est pas momentanément en mesure de suivre la consigne de ralentissement celui-ci se charge, dans le cadre des possibilités données, d'imposer la variation dans le temps de la vitesse de chaque véhicule (dvs/dt), au moins jusqu'à ce qu'il atteigne à nouveau la consigne initiale (dvs/dt).

5. Système de régulation de distance selon la revendication 3 ou 4, caractérisé en ce que dans le cas où l'un des véhicules n'est pas momentanément en mesure de suivre la consigne de ralentissement (dvs/dt), les distances (a) entre les véhicules (2, 3, 4) précédents sont provisoirement réduites pour créer une marge tampon.

6. Système de régulation de distance selon l'une au moins des revendications précédentes, caractérisé en ce que dans le cas où l'un des véhicules (2, 3, 4) n'est pas momentanément en mesure de suivre une consigne d'accélération (dvs/dt), celui-ci se charge d'imposer la variation dans le temps de la vitesse de chaque véhicule (dvs/dt), au moins jusqu'à ce qu'il atteigne à nouveau la consigne initiale (dvs/dt).

7. Système de régulation de distance selon la revendication 5 ou 6, caractérisé en ce que dans le cas où l'un des véhicules (2, 3, 4) n'est momentanément pas en mesure de suivre une consigne d accélération (dvs/dt), celui-ci se charge d'imposer la variation dans le temps de la vitesse de chaque véhicule (dvs/dt) pour les véhicules (3, 4) suivants, au moins jusqu'à ce que le convoi (1) disloque soit à nouveau reconstitué.

8. Système de régulation de distance selon l'une au moins des revendications précédentes, caractérisé en ce que la régulation des puissances d'entraînement ou de ralentissement de tous les véhicules (2, 3, 4) du convoi (1) intervient dans chaque cas au même instant.

9. Système de régulation de distance selon la revendication 8, caractérisé en ce que la régulation de la puissance d'entraînement ou de ralentissement de chaque véhicule (2, 3, 4) du convoi (1), s'effectue avec une temporisation (tv) qui résulte avant tout de la position du véhicule à l'intérieur du convoi (1), par rapport à celle-ci, de la vitesse de transmission des signaux ou des données et du temps de traitement nécessaire pour déterminer la puissance d'entraînement ou de ralentissement.

10. Système de régulation de distance selon l'une au moins des revendications précédentes, caractérisé en ce que l'adaptation de la variation dans le temps de la vitesse propre à chaque véhicule (dvi/dt) à l'accélération de consigne (dvs/dt) de chaque véhicule (2, 3, 4) est asservie à un réglage fin de la distance ou de la vitesse, le premier en particulier n'opérant que si une distance par rapport à un véhicule précédent, n'atteint pas ou dépasse un intervalle de tolérance donné.

11. Système de régulation de distance selon la revendication 10, caractérisé en ce que dans le cas où le réglage fin de la distance ou de la vitesse devient opérant pour un véhicule (2, 3, 4) du convoi (1), celui-ci se charge d'imposer l'accélération de consigne (dvs/dt) aux véhicules suivants (3, 4).

12. Système de régulation de distance selon l'une au moins des revendications précédentes, caractérisé en ce que l'accélération de consigne (dvs/dt) est égale à l'accélération réelle (dvs/dt) du véhicule (2) de tête.

13. Système de régulation de distance selon l'une au moins des revendications précédentes, caractérisé en ce que la transmission des informations s'effectue par un couplage inductif de chaque véhicule (2, 3, 4) à un câble de guidage (12), posé dans ou à côté de la chaussée (5).

14. Système de régulation de distance selon l'une au moins des revendications 1 ou 3 à 13, caractérisé en ce qu'une vitesse de consigne (vs) est imposée par un conducteur (13) du véhicule (2) de tête du convoi (1) ou par un autopilote ou un système de guidage de circulation ou est déterminée à partir des signaux de réglage d'éléments de commande, vitesse de consigne à partir de laquelle l'appareil de commande (8) du véhicule (2) de tête du convoi (1), détermine et impose une accélération de consigne (dvs/dt) et sa variation dans le temps, ainsi qu'une temporisation de sécurité (tvs) menant à une distance de sécurité (a(v)) dépendant de la vitesse de consigne, temporisation avec laquelle l'adaptation de l'accélération réelle (dvi/dt) à l'accélération de consigne (dvs/dt) d'un véhicule (3, 4) doit suivre celle du véhicule (2, 3) immédiatement précédent.
